# FASCICULE DE BREVET EUROPEEN

(11) **EP 3 096 999 B1**
(45) Date de publication et mention de la délivrance du brevet: **24.04.2019**
(21) Numéro de dépôt: 15701556.1
(22) Date de dépôt: 09.01.2015
(51) Int. Cl.: B62D 25/08

(54) **STRUCTURE DE CAISSE D'UN VÉHICULE AUTOMOBILE AVEC RENFORTS DE RÉPARTITION DES EFFORTS LIÉS À UN AMORTISSEUR ARRIÈRE DU VÉHICULE**
KAROSSERIEHÜLLENSTRUKTUR EINES KRAFTFAHRZEUGS MIT VERSTÄRKUNGEN ZUR VERTEILUNG VON KRÄFTEN IN VERBINDUNG MIT EINEM HINTEREN STOSSDÄMPFER DES FAHRZEUGS
BODY SHELL STRUCTURE OF A MOTOR VEHICLE WITH REINFORCEMENTS FOR DISTRIBUTING FORCES LINKED TO A REAR SHOCK ABSORBER OF THE VEHICLE

(30) Priorité: 23.01.2014 FR 1450551
(43) Date de publication de la demande: 30.11.2016
(73) Titulaire: RENAULT s.a.s., 92100 Boulogne-Billancourt (FR)
(72) Inventeur: RIOULT, Olivier, F-78960 Voisins-le-Bretonneux (FR); GAUMONT, Herve, F-78140 Velizy (FR); CAILLARD, Jerome, F-91190 Gif sur Yvette (FR); KNOP, Jean-Luc, F-77400 Saint Thibault des Vignes (FR)
(86) Numéro de dépôt international: PCT/FR2015/050048
(87) Numéro de publication internationale: WO 2015/110735

(56) Documents cités:
- JP-A- 2007 062 590
- JP-A- 2013 001 123

## Description

L'invention a pour objet les structures de caisse de véhicule automobile et plus particulièrement les points d'ancrage sur ces caisses des amortisseurs arrière du véhicule.

Avec le développement des véhicules électriques ou hybrides, on trouve de plus en plus fréquemment des architectures de véhicule dans lesquelles le plancher arrière du véhicule est surélevé, c'est-à-dire qu'il se trouve plutôt au niveau haut des découpes de passage de roues au lieu de se trouver à une hauteur intermédiaire entre le bas de la caisse et le haut du passage de roues.

Ces planchers surélevés permettent par exemple de libérer de l'espace pour placer des batteries d'accumulateurs électriques. Or, les exigences de résistance au choc du véhicule, notamment de résistance à certains types de choc arrière, appliqués à une hauteur normalisée par rapport au véhicule, sont plutôt favorables à un positionnement bas des longerons des renforts structurels longitudinaux du véhicule.

Pour pouvoir à la fois libérer l'espace nécessaire au positionnement des batteries, et satisfaire aux exigences de choc arrière, certaines architectures de véhicule présentent ainsi des longerons qui sont localement déportés vers le haut à l'arrière du véhicule. Du fait de ce déport, le longeron arrière, à section égale, est plus sujet à déformation lors d'un choc qu'un longeron équivalent rectiligne.

En outre, l'extrémité arrière du longeron dans ces architectures n'est plus positionnée face au point d'impact normalisé lors des tests de choc arrière.

On est alors amené à augmenter la section et donc la masse des longerons, et à rajouter des portions de structure complémentaires destinées à transférer l'énergie de l'impact, de la hauteur à laquelle elle est appliquée, vers l'avant du longeron.

Une autre problématique engendrée par l'élévation du plancher arrière du véhicule est que les coupelles de fixations d'amortisseurs, traditionnellement rattachées au longeron, tendent à se retrouver en dessous du plancher du véhicule et ne sont plus reliées de manière optimale à la partie haute de la caisse. Elles ne peuvent donc être en synergie avec cette partie haute de la caisse afin de dissiper une partie des efforts transmis par l'amortisseur.

L'invention a pour but de proposer une structure de caisse de véhicule automobile qui permet de limiter la masse totale de la caisse tout en permettant d'assurer une bonne résistance du véhicule au choc arrière et d'assurer une distribution favorable des contraintes engendrées par les points de fixation des amortisseurs, notamment des amortisseurs arrière du véhicule.

A cette fin, l'invention propose selon le préambule de la revendication 1, une structure de caisse de véhicule automobile, comprenant une superstructure latérale de caisse définissant de part et d'autre du véhicule deux portions de logement de passage de roues du véhicule. Les deux portions de logement de passage de roue, chaque logement pouvant accueillir au moins une roue, sont reliées par un plancher du véhicule. La structure de caisse comprend au niveau de chacune des deux portions de logement de passage de roue, une pièce de passage de roues et au moins une coupelle de fixation d'amortisseur arrière assemblée par ses bords à chacune des pièces de passage de roues. Le plus souvent, chaque pièce de passage de roues contribue à délimiter un logement abritant une seule roue du véhicule, mais un logement pourrait, dans certaines variantes de réalisation, abriter plusieurs roues de deux essieux voisins. La pièce de passage de roues définit au moins une portion de surface sensiblement oblique autour et au-delà des rebords de la coupelle. La superstructure comprend en outre une tôle structurelle solidaire d'une portion de surface oblique de la pièce de passage de roues et solidaire d'une portion de surface sensiblement verticale de la superstructure.

Le document JP2007062590-A décrit les caractéristiques du préambule de la revendication 1.

Avantageusement, le plancher est un plancher arrière de véhicule, et les passages de roues sont des passages de roues arrière du véhicule. Selon une variante de réalisation, la portion de surface oblique peut être horizontale.

Selon un mode de réalisation préféré, la coupelle présente deux premières parois sensiblement verticales, sensiblement parallèles à la tôle structurelle, assemblées chacune par au moins un rebord à la pièce de passage de roue, et dont au moins une est située à une distance de la tôle structurelle qui est inférieure ou égale à la plus grande dimension de la coupelle.

La structure peut en outre comprendre un longeron de renfort arrière, la superstructure latérale de caisse s'élevant au dessus du longeron. La coupelle peut être assemblée au longeron au moyen d'une pièce de réhausse formant poutre et reliant le longeron et la coupelle. De manière préférentielle, les portions de passage de roues sont décalées verticalement vers le haut par rapport au longeron.

De préférence, la coupelle de fixation d'amortisseur est assemblée à la superstructure latérale, et assemblée à un longeron longitudinal de renfort au moyen d'une pièce de réhausse reliant la coupelle et une portion seulement du longeron. Par une portion seulement du longeron, on entend une portion seulement de la longueur du longeron suivant la direction longitudinale du véhicule. La pièce de réhausse est de largeur, mesurée suivant une direction longitudinale du véhicule, sensiblement égale à celle de la coupelle. La largeur maximale de la pièce de réhausse peut être typiquement comprise entre 0,9 et 1,3 fois la largeur maximale de la coupelle, le terme largeur étant ici employé pour désigner une dimension selon l'axe longitudinal du véhicule. La pièce de réhausse positionne la coupelle au dessus du longeron, c'est à dire dans une position déportée verticalement par rapport au longeron. De manière avantageuse, les points d'assemblage entre la pièce de réhausse et le longeron sont sensiblement alignés suivant une direction verticale avec un bord de la coupelle. De manière préférentielle, le décalage vertical entre le bas de la coupelle et le point le plus proche du longeron est au moins égal à la hauteur de la coupelle, le décalage vertical entre le bas de la coupelle et le point le plus proche du longeron peut être, par exemple, compris entre deux et dix fois la hauteur de la coupelle. On entend par hauteur une dimension mesurée suivant une direction verticale de la pièce assemblée dans le véhicule. La pièce de réhausse présente ainsi une largeur qui permet de transmettre les efforts verticaux entre la coupelle et le longeron, sans fermer toute la largeur de l'espace vertical entre le plancher et le longeron. On peut ainsi avec une pièce consommant peu de matière, transférer vers le longeron les efforts verticaux de l'amortisseur, et on garde néanmoins une bonne accessibilité latérale aux éléments se trouvant entre les roues et sous le plancher. De manière avantageuse, le plancher est placé au dessus d'une limite haute des ouvertures de passage de roues visibles sur la carrosserie extérieure au véhicule.

Selon un mode de réalisation particulièrement avantageux, plusieurs tôles structurelles parallèles sont disposées de part et d'autre de la coupelle par rapport à l'axe longitudinal du véhicule.

Au moins une tôle structurelle peut faire partie d'une portion de structure formant une boîte à quatre côtés et un fond dont un côté est une portion de surface sensiblement verticale de la superstructure et dont le fond est une portion de la pièce de passage de roue.

Selon un mode de réalisation avantageux, la coupelle de fixation d'amortisseur est positionnée pour être sensiblement dans le prolongement horizontal du plancher arrière. Par exemple, la hauteur minimale du plancher arrière peut se trouver entre la hauteur assemblée du fond de la coupelle et une hauteur maximale d'un bord de la coupelle.

Avantageusement, la pièce de réhausse présente une géométrie de poutre à section sensiblement en U, l'axe de la poutre étant orienté sensiblement verticalement, au moins deux bords parallèles de la section en U venant se placer dans le prolongement des deux premières parois sensiblement verticales de la coupelle.

Les deux premiers bords parallèles de la section en U sont de préférences assemblés, par exemple par soudage, aux deux premières parois sensiblement verticales de la coupelle. La section en U peut être évolutive entre le ou les points de fixation au longeron et entre les zones d'assemblage entre coupelle et pièce de réhausse. Par exemple, le U peut n'être pas tout à fait symétrique, et la hauteur des bords du U peut augmenter entre le longeron et la coupelle. Au niveau des zones d'assemblage avec la coupelle, la hauteur du U peut être choisie suffisante pour que les bords de la poutre entourent totalement, au moins dans un plan de section droite de la poutre, les deux premières parois de la coupelle. Les deux premières parois de la coupelle peuvent être entièrement doublées, sur leur portion verticale, par deux premiers bords de la poutre en U de la pièce de réhausse.

Selon un mode de réalisation, la coupelle présente au moins une troisième paroi latérale sensiblement verticale ou oblique, joignant les deux premières parois, et la coupelle présente une paroi de fond sensiblement horizontale joignant les deux premières parois et placée dans la continuité de la troisième paroi. Par oblique on entend ici une direction qui n'est ni verticale ni horizontale, le véhicule étant placé dans une position de roulage usuelle sur route plane.

Selon un mode réalisation préféré, le côté ouvert de la section en U de la pièce de réhausse est tourné vers le côté latéral du véhicule qui est extérieur au véhicule, et la troisième paroi latérale de la coupelle se trouve du côté extérieur au véhicule, donc du côté ouvert du U. La coupelle peut ne pas présenter de quatrième paroi, ou peut présenter une quatrième paroi sensiblement verticale faisant face à la troisième paroi. Les première, seconde, troisième et quatrième paroi peuvent chacune être reliée à la paroi de fond de la coupelle par une portion courbe de paroi afin de limiter les concentrations de contraintes au niveau des zones de transition entre la paroi de fond de la coupelle et au moins une des parois latérales de la coupelle, comprenant chacune de préférence au moins une portion verticale de paroi. Selon un mode de réalisation préférentiel, la hauteur de la quatrième paroi est inférieure à la hauteur de la troisième paroi. D'autres modes de réalisation sont bien sûr envisageables. La troisième et la quatrième paroi de la coupelle peuvent être de hauteur sensiblement égale, ou la paroi la plus haute peut border la coupelle du côté intérieur au véhicule. Le côté ouvert du U peut être tourné vers l'intérieur du véhicule, et/ou la base du U peut se trouver dans la continuité de la troisième paroi.

La paroi de fond de la coupelle peut typiquement être percée pour accueillir, par exemple, une vis de fixation de l'amortisseur.

Une pièce de renfort peut être assemblée sur le fond de la coupelle pour augmenter la résistance à la flexion du fond de la coupelle. Des nervures peuvent être réalisées par emboutissage pour relier suivant une trajectoire courbe le fond de la coupelle et au moins une des parois sensiblement verticale de la coupelle, de manière à rigidifier globalement la coupelle et faciliter la transmission des efforts entre le fond de la coupelle où est assemblée l'extrémité de l'amortisseur, et les parois de la coupelle reliées aux côtés de la poutre en U.

De manière avantageuse, les deux premières parois et la troisième paroi peuvent être assemblées à la pièce de passage de roues en soudant deux premiers rebords des deux premières parois, et en soudant un troisième rebord de la troisième paroi, les rebords étant pliés pour se trouver sensiblement dans un plan commun avec un rebord intérieur d'une ouverture de la pièce de passage de roue. Selon un mode de réalisation préférentiel, la coupelle est ouverte vers le haut, c'est-à-dire que l'amortisseur vient en appui sur le fond de la coupelle en restant à l'extérieur de la coupelle. La coupelle est de préférence assemblée à la superstructure latérale de manière à ce que l'ouverture de la coupelle affleure par en dessous au niveau d'une ouverture de la pièce de passage de roue. Cette orientation de la coupelle permet d'assembler la coupelle par trois de ses parois verticales à la poutre en U et permet d'assembler la coupelle par des rebords de la coupelle, à la pièce de passage de roue. On optimise ainsi la répartition des efforts de l'amortisseur entre la poutre en U et la pièce de passage de roue. Selon un mode de réalisation avantageux, la pièce de passage de roues présente un bord inférieur qui est de niveau avec un bord du plancher et qui est assemblé à ce bord de plancher.

La coupelle peut présenter au moins une troisième paroi latérale sensiblement verticale ou oblique joignant les deux premières parois, présenter une paroi de fond sensiblement horizontale joignant les deux premières parois et placée dans la continuité de la troisième paroi, et peut être assemblée par des rebords des deux premières parois et de la troisième paroi à la pièce de passage de roue.

Avantageusement, la coupelle est également assemblée à la pièce de passage de roues le long d'un rebord qui longe la paroi de fond de la coupelle, ou le long d'un rebord qui longe une quatrième paroi de la coupelle. Selon un mode de réalisation avantageux, la troisième paroi de la coupelle peut être doublée par une portion centrale de la poutre en U, la portion centrale étant la bande centrale de la poutre joignant les deux bandes formant les côtés du U de la poutre. Selon un autre mode de réalisation, c'est un rebord du fond de la coupelle, c'est-à-dire la quatrième paroi, ou c'est un rebord de la quatrième paroi qui est assemblé(e) à la portion centrale de la poutre en U. La poutre en U entoure donc la coupelle sur au moins deux faces, et de préférence sur trois faces. Les faces concernées sont la première paroi, la deuxième paroi, et l'une parmi la troisième et la quatrième paroi.

La coupelle peut être également assemblée à la pièce de passage de roues le long d'un rebord qui longe soit la paroi de fond de la coupelle, soit une quatrième paroi opposée à la troisième paroi et de hauteur inférieure à la hauteur de la troisième paroi.

Selon un mode de réalisation préféré, la pièce de réhausse est assemblée à la coupelle en au moins plusieurs points différents de chacune des deux premières parois de la coupelle.

De manière préférentielle, la pièce de réhausse est assemblée à la coupelle en au moins trois points de chacune des deux premières parois de la coupelle. Selon un mode de réalisation avantageux, la pièce de réhausse peut en outre être assemblée directement à la pièce de passage de roues le long de certaines portions du rebord intérieur de l'ouverture de la pièce de passage de roue.

L'invention propose également un véhicule automobile comprenant une superstructure latérale de caisse définissant de part et d'autre du véhicule deux portions de logement de passage de roues droite et gauche du véhicule. Les deux portions de logement de passage de roues droite et gauche sont reliées par un plancher du véhicule. Le véhicule comprend au niveau de chaque portion de logement de passage de roue, une pièce de passage de roues et au moins une coupelle de fixation d'amortisseur assemblée à chacune des pièces de passage de roue. La pièce de passage de roues définit au moins une portion de surface sensiblement oblique autour et au-delà des rebords de la coupelle. La superstructure comprend en outre une tôle structurelle solidaire d'une portion de surface oblique de la pièce de passage de roues et solidaire d'une portion de surface sensiblement verticale de la superstructure.

D'autres buts, caractéristiques et avantages de l'invention apparaîtront à la lecture de la description suivante, donnée uniquement à titre d'exemple nullement limitatif, et faite en référence aux dessins annexés sur lesquels :
- la figure 1 est une vue simplifiée en coupe d'une portion de structure de caisse selon l'invention,
- la figure 2 est une vue de dessus de la portion de structure de caisse de la figure 1,
- la figure 3 est une vue en perspective de quelques éléments caractéristiques d'une autre structure de caisse selon l'invention.

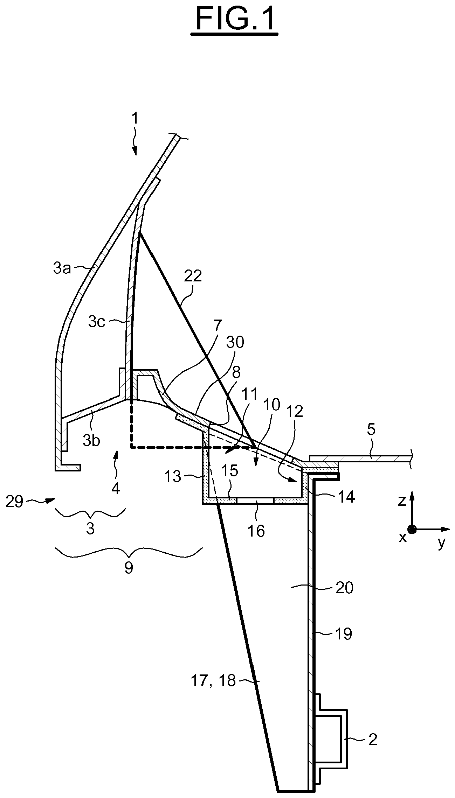

Sur les figures 1, 2 et 3, l'axe x représente un axe longitudinal du véhicule, l'axe y représente un axe transversal du véhicule et l'axe z représente un axe vertical.

Les structures représentées sur les figures 1, 2 et 3 sont présentes au moins deux fois sur le véhicule avec à chaque fois deux structures symétriques par rapport à un axe parallèle à l'axe x et passant par le milieu du véhicule.

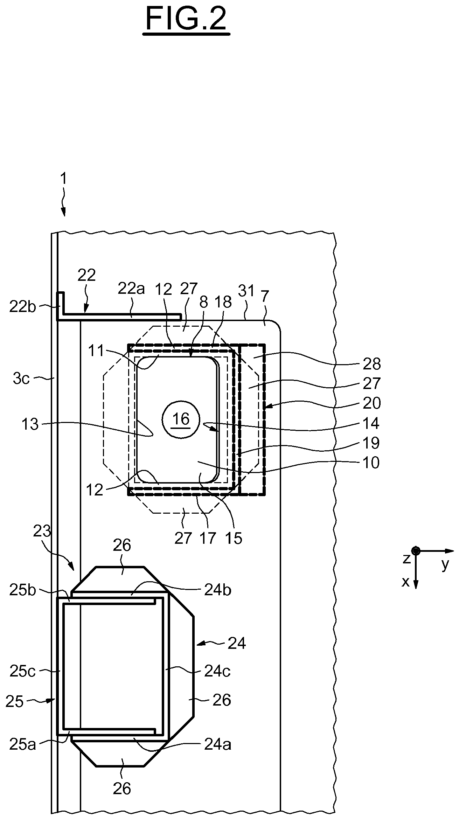

Tel qu'illustré sur les figures 1 et 2, une structure de caisse 1 de véhicule automobile (non représenté) selon l'invention comprend un longeron 2 disposé de manière longitudinale le long du véhicule et s'étendant au moins pour partie à l'arrière du véhicule. La structure comprend une portion sensiblement verticale 3 d'une superstructure latérale 9 dans laquelle est ménagée une ouverture 29 de passage de roues permettant de monter une roue sur le véhicule en dessous de la superstructure latérale 9, et comprend un plancher arrière 5 qui est surélevé, c'est-à-dire placé verticalement au dessus des longerons 2.

Le plancher arrière 5 ne se trouve pas nécessairement en surplomb par rapport aux longerons 2 mais est en tout cas décalé verticalement vers le haut par rapport à ceux-ci. Le plancher 5 est relié à la superstructure latérale 9 par une pièce de passage de roues 7 définissant au moins une portion de surface oblique 30 et qui est assemblée, du côté intérieur au véhicule (par rapport à un sens transversal du véhicule), au plancher arrière 5, et qui est assemblée, du côté extérieur au véhicule, à la superstructure latérale 9.

La superstructure latérale 9 comprend au moins une portion sensiblement verticale 3, qui peut par exemple comprendre une portion extérieure de custode 3a, comprenant une tôle de finition extérieure, une portion intérieure de custode 3c sur laquelle sont assemblés divers éléments intérieurs au véhicule, et une portion intercalaire de custode 3b reliant la portion extérieure de custode 3a et la portion intérieure de custode 3c de manière à laisser un espace vide entre les portions intérieure et extérieure pour faciliter l'assemblage de divers éléments sur la portion intérieure 3c. La portion intercalaire 3b définit une portion radialement extérieure d'un logement 4 de passage de roues à l'intérieur duquel une roue du véhicule peut être insérée en passant par l'ouverture 29. Le restant de la profondeur (selon l'axe y) du logement 4 de passage de roues est défini par la pièce de passage de roues 7.

Sur la pièce de passage de roues 7 est assemblée une coupelle de fixation d'amortisseur 10. Une ouverture 8 est ménagée dans la pièce de passage de roues 7, en dessous de laquelle la coupelle 10 est assemblée par-dessous la pièce de passage de roues 7, les bords de la coupelle 10 venant en appui sur la pièce de passage de roues 7 et étant assemblés à celle-ci autour de l'ouverture 8. Le fond 15 de la coupelle 10 se trouve décalé vers le bas par rapport à la pièce de passage de roues 7.

Le fond 15 peut être percé d'un perçage 16 permettant l'assemblage de l'extrémité de l'amortisseur arrière (non représenté). Ce fond 15 peut éventuellement être doublé d'une tôle de renfort (non représentée).

La coupelle 10 est reliée au longeron 2 par une pièce de réhausse 20 qui relie ainsi la superstructure latérale 9 au longeron 2.

La pièce de réhausse 20, comme on peut le voir sur la vue de dessus de la figure 2, présente une section de poutre en U, les deux bras 17, 18 du U s'étendant suivant l'axe y transversal au véhicule, et la base 19 du U s'étendant suivant l'axe x. La pièce de réhausse 20 est soudée ou autrement assemblée sur le longeron 2, et est également solidaire, par les portions formant les bras 17, 18 du U, avec la coupelle 10. La pièce de réhausse 20 entoure, comme on peut le voir sur la figure 2, la coupelle 10 qui présente un contour sensiblement rectangulaire ou carré. La coupelle 10 présente une première paroi de coupelle 11 et une seconde paroi de coupelle 12 sensiblement parallèles à l'axe transversal y. La coupelle 10 présente une troisième paroi de coupelle 13 bordant la coupelle du coté extérieur au véhicule (par rapport à l'axe y) et une quatrième paroi 14 qui peut être éventuellement de hauteur nulle et qui borde la coupelle 10 du côté intérieur au véhicule.

On retrouve bien sûr sur la figure 2 des éléments communs à la figure 1, les mêmes éléments étant représentés par les mêmes références. Pour alléger le dessin, le plancher 5 et le longeron 2 n'ont cependant pas été représentés sur la figure 2.

La pièce de réhausse 20 présente une section en U, cette section comprenant un premier bord parallèle 17 et un second bord parallèle 18 tous deux parallèles à l'axe y transversal du véhicule (ou du moins formant un angle symétrique par rapport à cet axe y transversal au véhicule) et présente un troisième bord 19 formant la base de la section en U et qui est sensiblement parallèle à la direction longitudinale x du véhicule.

Les première et seconde parois de la coupelle sont sensiblement verticales ou se terminent par une portion sensiblement verticale. Les premiers bords, seconds bords et bords de base de la section en U de la pièce de réhausse 20 forment également des plans sensiblement verticaux. Le premier et le second bords parallèles de la pièce de réhausse 20 sont assemblés à la première et la seconde parois respectivement 11 et 12 de la coupelle 10. Le troisième bord ou bord de base de la section en U est ici assemblé à la quatrième paroi de la coupelle située du côté intérieur au véhicule. On peut envisager des variantes de réalisation dans lesquelles ce troisième bord de la pièce de réhausse 20 est assemblé à la troisième paroi de coupelle se trouvant du côté extérieur au véhicule.

La coupelle 10 est assemblée à la pièce de passage de roues 7 par des languettes 27 longeant les bords des première, seconde, troisième et quatrième parois de la coupelle 10.

La pièce de réhausse 20 peut également présenter une ou plusieurs languettes 28 permettant de solidariser la pièce de réhausse 20 avec la pièce de passage de roues 7 éventuellement en intercalant entre une languette 28 et la pièce de passage de roues 7, une languette 27 de la coupelle 10.

Tel que visible à la fois sur les figures 1 et 2, la structure de caisse 1 de véhicule automobile comprend également une tôle structurelle 22 sensiblement en forme d'équerre. La tôle structurelle 22 comprend au moins une portion de reprise d'efforts 22a sensiblement verticale, qui est sensiblement parallèle à la première paroi 11 et à la seconde paroi 12 de coupelle 10, ainsi qu'au premier bord parallèle 17 et au second bord parallèle 18 de la pièce de réhausse 20.

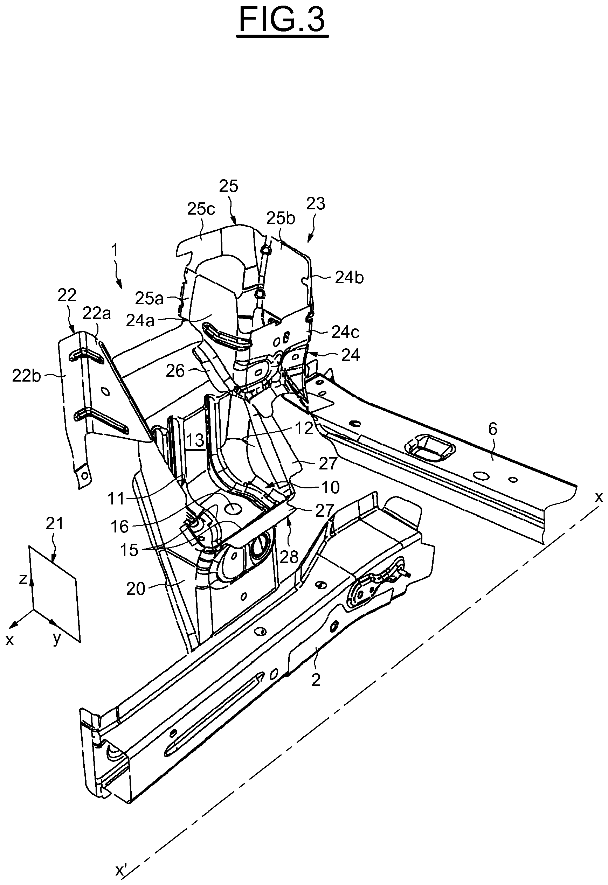

Toutes ces portions 22a, 11, 12, 17, 18 verticales de pièces de la structure de caisse sont toutes parallèles à un plan géométrique 21 vertical et transversal au véhicule. La plan 21 est représenté sur la figure 3, et a comme axes directeurs les axes y, z. On peut envisager des variantes de réalisation dans lesquelles le plan 21, commun à la tôle structurelle 22, aux première et seconde parois 11, 12 de coupelle 10, aux premier et second bords parallèles 17, 18 de la section en U de la pièce de réhausse 20, n'est pas strictement vertical, ou n'est pas strictement transversal au véhicule. De manière préférentielle, le plan 21 reste cependant incliné de moins de 10° par rapport à la verticale et de préférence reste incliné de moins de 5° par rapport à la verticale.

L'inclinaison du plan 21 par rapport à l'axe y peut dépendre d'une courbure locale du longeron 2 sur lequel est assemblée la pièce de réhausse 20. Le plan 21 peut être alors perpendiculaire au longeron. On peut envisager des variantes de réalisation dans lesquelles les premiers et seconds bords 17, 18 de la pièce de réhausse 20 ne seraient pas parallèles mais seraient convergents ou divergents (en vue sur une section droite de la poutre formant la pièce de réhausse). Les première et seconde parois de coupelle 11, 12 peuvent être alors convergentes ou divergentes, de manière à assembler la première paroi de coupelle au premier bord de la pièce de réhausse, et la seconde paroi de coupelle au second bord de la pièce de réhausse. Une tôle structurelle 22 peut être alors positionnée de manière à être parallèle à celle des première et seconde parois de coupelle 11, 12 qui est la plus proche de la tôle structurelle 22, ou peut être dans un plan transversal au véhicule.

La tôle structurelle 22 est placée à proximité d'au moins une parmi la première et la seconde parois de la coupelle, de manière à pouvoir reprendre efficacement une partie des efforts verticaux transmis par l'amortisseur à la coupelle 10 puis par la coupelle 10 à la pièce de passage de roues 7. La tôle structurelle 22 peut comprendre une portion 22b également verticale et sensiblement perpendiculaire à la portion 22a de reprise d'efforts. La portion 22b est assemblée à la portion intérieure de custode 3c et permet de transférer les efforts verticaux reçus par la portion de reprise d'efforts 22a, vers la portion intérieure de custode 3c. La tôle structurelle 22 est également solidaire de la pièce de passage de roues 7, sur au moins une portion du bord inférieur de la portion 22a de reprise d'efforts. Une languette (non représentée) d'assemblage de la tôle structurelle 22 peut faire un angle avec la portion 22a et être assemblée sur la portion de surface oblique 30 de la pièce de passage de roues 7. Selon une autre variante de réalisation, la portion 22a de reprise d'efforts peut être assemblée en partie inférieure à une portion sensiblement verticale 31 de la pièce de passage de roues 7, bordant la pièce de passage de roues 7 suivant une direction de plan sensiblement perpendiculaire à la portion intérieure de custode 3c. Selon encore un autre mode de réalisation qui peut se combiner aux précédents, la tôle structurelle 22 peut être assemblée par sa portion 22a à une pièce tierce (non représentée) comprenant une portion de tôle également parallèle au plan 21 et venant se placer dans le prolongement de la portion 22a de reprise d'efforts, cette pièce tierce étant elle aussi solidaire de la pièce de passage de roues 7.

Ainsi, les efforts verticaux transmis par l'amortisseur arrière (non représenté) à la coupelle 10 peuvent être transmis par les bords de la coupelle 10 au travers de la pièce de réhausse 20 vers le longeron 2 et peuvent être aussi pour partie transmis par la coupelle 10 vers la pièce de passage de roues 7, puis par la tôle structurelle 22, puis vers la superstructure latérale 9 dont la direction est favorable à la reprise des efforts verticaux. On peut envisager des variantes de réalisation dans lesquelles la pièce de passage de roues 7 n'est pas oblique mais est horizontale.

Afin de favoriser le transfert des efforts verticaux vers la partie supérieure de la structure de caisse, notamment vers la superstructure latérale 9, la tôle structurelle 22 est située à proximité de la coupelle 10, typiquement à une distance inférieure à la plus grande dimension de la coupelle elle-même, cette distance minimale étant respectée à la fois concernant la distance suivant l'axe x et concernant la distance suivant l'axe y.

Selon un mode de réalisation avantageux, la tôle structurelle 22 est assemblée à la pièce de passage de roues 7 de manière à ce que la longueur totale d'assemblage suivant l'axe y, entre la tôle structurelle 22 et la pièce de passage de roues 7, soit au moins égale à la moitié, et de préférence les deux tiers, de la distance minimale selon cet axe y entre une des parois latérales de la coupelle et une portion de surface sensiblement verticale de la superstructure, par exemple la portion de custode intérieure 3c. Dans certains modes de réalisation particulièrement avantageux, la longueur totale d'assemblage est même supérieure à cette distance minimale, de manière à ce qu'une portion de la tôle structurelle 22 longe au moins une portion d'une paroi latérale 11, 12 de la coupelle 10. On améliore ainsi la reprise par la tôle structurelle des efforts transmis par la coupelle 10 à la pièce de passage de roues 7.

La tôle structurelle 22 peut être assemblée à la pièce de passage de roues 7 par des languettes parallèles à la portion 30 de surface oblique de la pièce de passage de roues 7, ou par une portion de la pièce de passage de roues 7 qui est au contraire verticale et assemblée sur une portion verticale de la tôle structurelle 22.

La tôle structurelle 22 peut d'ailleurs résulter d'un assemblage de plusieurs pièces comportant chacune au moins une portion sensiblement plane parallèle à l'axe 21, toutes les portions parallèles à l'axe 21 étant assemblées pour former une plaque de transfert d'efforts solidaire à la fois de la pièce de passage de roues 7 et solidaire de la portion 3 de superstructure latérale 9.

Afin d'améliorer encore le transfert des efforts verticaux de la pièce de passage de roues 7 au voisinage de la coupelle 10 vers la superstructure latérale 9, d'autres éléments de transfert d'efforts verticaux peuvent être ajoutés qui sont solidaires à la fois de la pièce de passage de roues 7 et de la superstructure latérale 9.

Ces éléments comportent de préférence un ou plusieurs plans verticaux reliant la pièce de passage de roues 7 et la superstructure latérale 9. Ces plans verticaux sont de préférence, au moins pour certains, parallèles au plan 21 et parallèles aux première et seconde parois 11, 12 de la coupelle 10. Au moins un de ces plans verticaux parallèles se trouve à proximité de la coupelle 10, c'est-à-dire à une distance suivant l'axe x et à une distance suivant l'axe y qui est inférieure à la plus grande dimension de la coupelle.

Ainsi, sur la figure 2, peut-on voir un casier d'enrouleur de ceinture 23 comprenant une pièce avant 24 et une pièce arrière 25. La pièce arrière 25 comprend une portion de fond 25c accolée à, et fixée sur, la portion intérieure de custode 3c et comprend deux parois latérales 25a et 25b parallèles au plan 21 de transmission d'efforts.

Le casier 23 comprend également une pièce avant 24 comprenant une paroi avant 24c parallèle à la paroi arrière 25c et comprenant deux parois latérales 24a et 24b assemblées sur les parois latérales 25a et 25b de la pièce arrière 25. La pièce avant 25 comprend en outre des languettes d'assemblage 26 permettant de solidariser le bas de la pièce avant 24 avec la pièce de passage de roues 7.

Les languettes d'assemblage 26 longent une longueur supérieure à au moins la moitié de longueur suivant l'axe y des parois latérales 24a et 24b, de manière à permettre de transmettre de manière efficace les efforts verticaux de la pièce de passage de roues 7 vers l'ensemble du casier d'enrouleur 23 puis vers la superstructure latérale 9.

Le casier d'enrouleur 23 n'est pas visible sur la figure 1 car il se trouve en avant du plan de coupe de cette figure.

La figure 3 est une représentation en perspective d'une structure de caisse similaire à celle représentée en figures 1 et 2. On retrouve sur la figure 3 des éléments communs aux figures 1 et 2, les mêmes éléments étant désignés par les mêmes références. On retrouve notamment sur la figure 3 une pièce de réhausse 20 en forme de poutre à section droite en U, les bords du U entourant les parois latérales d'une coupelle 10 de fixation d'amortisseurs.

On n'a pas représenté sur la figure 3 la pièce de passage de roues 7, afin de mieux voir les contours de la coupelle 10 et de la pièce de réhausse 20. On retrouve en revanche sur la figure 3 la tôle structurelle 22 en forme d'équerre et un casier d'enrouleur de ceinture 23 disposé cette fois-ci vers l'arrière du véhicule par rapport à la tôle structurelle 22.

Sur la figure 3, le plancher 5 n'a pas été représenté mais on peut voir une traverse 6 de plancher arrière indiquant la hauteur d'assemblage du plancher.

Grâce à la structure de caisse selon l'invention, on peut disposer d'un espace sous le plancher arrière du véhicule tout en gardant une bonne résistance aux chocs arrière du véhicule grâce à une position basse des longerons de renforts longitudinaux.

La pièce de réhausse 20, qui représente un coût matière réduit, permet de transmettre les efforts de l'amortisseur arrière (non représenté) vers le longeron de renfort 2. Les éléments de transfert d'efforts 22, 23 permettent de transmettre les efforts de l'amortisseur arrière (non représenté) vers la superstructure latérale 9.

L'invention ne se limite pas aux exemples de réalisation décrits et peut se décliner en de nombreuses variantes. On peut envisager une structure de caisse comportant une pièce de réhausse 20 telle que décrite précédemment et ne comportant pas les tôles structurelles 22.

On peut envisager une structure de caisse dans laquelle la coupelle 10 serait reliée par une pièce autre que la poutre en U décrite précédemment avec le longeron 2, et comportant au contraire une ou plusieurs tôles structurelles 22 et/ou un élément de transfert d'efforts en forme de boîte tel que le casier d'enrouleur 23.

Le plan préférentiel 21 de reprise des efforts verticaux pourrait ne pas être parallèle à l'axe y transversal au véhicule. La coupelle pourrait être assemblée de manière à ce que le fond de la coupelle soit tourné vers le haut du véhicule. La pièce de réhausse 20 en forme de poutre en U pourrait avoir l'ouverture du U tournée vers l'intérieur du véhicule. La pièce de réhausse 20 pourrait avoir une forme entourant la coupelle 10 en partie supérieure, et évoluer vers une poutre de section différente en partie inférieure, par exemple vers une section rectangulaire fermée ou une section triangulaire fermée. Le contour en vue de dessus de la coupelle elle-même pourrait être triangulaire ou trapézoïdal. La partie de la poutre entourant la coupelle peut présenter une section fermée entourant toutes les parois latérales de la coupelle. Le niveau du plancher arrière pourrait ne pas correspondre au bas de l'ouverture de la pièce de passage de roues 7 accueillant la coupelle 10.

Des assemblages démontables pourraient remplacer tout ou partie des assemblages par soudures reliant le longeron 2, la pièce de réhausse 20, la coupelle 10, la pièce de passage de roues 7, la tôle structurelle 22, la pièce avant 24 et la pièce arrière 25 du casier 23 d'enrouleur de ceinture.

## Revendications

1. Structure de caisse (1) de véhicule automobile, comprenant une superstructure latérale (9) de caisse définissant de part et d'autre du véhicule deux portions de logement (4) de passage de roues du véhicule reliées par un plancher (5) du véhicule, la structure de caisse (9) comprenant au niveau de chacune des deux portions de logement (4) de passage de roue, une pièce de passage de roues (7) et au moins une coupelle (10) de fixation d'amortisseur arrière assemblée par ses bords (27) à chacune des pièces (7) de passage de roues, la pièce de passage de roues (7) définissant au moins une portion de surface (30) sensiblement oblique autour et au-delà des rebords de la coupelle (10), la superstructure (9) comprenant en outre une tôle structurelle (22) solidaire d'une portion de surface oblique de la pièce de passage de roues (7) et solidaire d'une portion de surface sensiblement verticale (3c) de la superstructure (9), **caractérisée en ce que** la coupelle (10) est assemblée par-dessous la pièce de passage de roue (7) de telle sorte qu'un fond (15) de la coupelle (10) se trouve décalé vers le bas par rapport à la pièce de passage de roue (7) .

2. Structure selon la revendication 1, dans laquelle la coupelle (10) présente deux premières parois (11,12) sensiblement verticales, sensiblement parallèles à la tôle structurelle (22), assemblées chacune par au moins un rebord (27) à la pièce de passage de roues (7), et dont au moins une (11,12) est située à une distance de la tôle structurelle (22) qui est inférieure ou égale à la plus grande dimension de la coupelle (10).

3. Structure selon l'une des revendications 1 ou 2, comprenant en outre un longeron (2) de renfort arrière, la superstructure (9) latérale de caisse s'élevant au dessus du longeron (2), dans laquelle la coupelle (10) est assemblée au longeron (2) au moyen d'une pièce de réhausse (20) formant poutre et reliant le longeron (2) et la coupelle (10).

4. Structure selon l'une quelconque des revendications précédentes, comprenant plusieurs tôles structurelles (22,25) parallèles, disposées de part et d'autre de la coupelle (10) par rapport à l'axe longitudinal (x) du véhicule.

5. Structure selon l'une quelconque des revendications précédentes, dans laquelle au moins une tôle structurelle (25) fait partie d'une portion de structure (23) formant une boîte à quatre côtés et un fond dont un côté est une portion de surface sensiblement verticale (3c) de la superstructure et dont le fond est une portion de la pièce de passage de roues (7).

6. Structure selon l'une quelconque des revendications 3 à 5, dans laquelle la pièce de réhausse (20) présente une géométrie de poutre à section sensiblement en U, l'axe (z) de la poutre étant orienté sensiblement verticalement, au moins deux bords parallèles (17,18) de la section en U venant se placer dans le prolongement des deux premières parois (11,12) sensiblement verticales de la coupelle (10).

7. Structure selon la revendication 6, dans laquelle la coupelle (10) présente au moins une troisième paroi latérale (13) sensiblement verticale ou oblique joignant les deux premières parois (11,12), présente une paroi de fond (15) sensiblement horizontale joignant les deux premières parois (11, 12) et placée dans la continuité de la troisième paroi (13), et dans laquelle la coupelle (10) est assemblée par des rebords (27) des deux premières parois (11, 12) et de la troisième paroi (13) à la pièce de passage de roues (7).

8. Structure selon la revendication 7, dans laquelle la coupelle (10) est également assemblée à la pièce de passage de roues (7) le long d'un rebord qui longe soit la paroi de fond (15) de la coupelle (10), soit une quatrième paroi (14) opposée à la troisième paroi (13) et de hauteur inférieure à la hauteur de la troisième paroi (13).

9. Structure selon l'une quelconque des revendications 3 à 8, dans laquelle la pièce de réhausse (20) est assemblée à la coupelle (10) en au moins plusieurs points différents de chacune des deux premières parois (11,12) de la coupelle (10).

10. Véhicule automobile, comprenant une structure de caisse (1) selon la revendication 1.

## Patentansprüche

1. Karosseriestruktur (1) eines Kraftfahrzeugs, die einen seitlichen Karosserieüberbau (9) umfasst, der zu beiden Seiten des Fahrzeugs zwei Radlauf-Aufnahmeabschnitte (4) des Fahrzeugs definiert, die durch einen Fußboden (5) des Fahrzeugs verbunden sind, wobei die Karosseriestruktur (9) im Bereich jedes ihrer zwei Radlauf-Aufnahmeabschnitte (4) ein Radlaufteil (7) und mindestens eine Schale (10) zum Befestigen eines hinteren Stoßdämpfers, der durch seine Ränder (27) an jedem der Radlaufteile (7) angebracht ist, umfasst, wobei die Radlaufteile (7) mindestens einen Oberflächenabschnitt (30), der um und über Ränder der Schale (10) hinaus im Wesentlichen schräg ist, definieren, wobei der Überbau (9) außerdem ein Strukturblech (22) umfasst, das fest mit einem schrägen Oberflächenabschnitt des Radlaufteils (7) verbunden ist und fest mit einem im Wesentlichen vertikalen Oberflächenabschnitt (3c) des Überbaus (9) verbunden ist, **dadurch gekennzeichnet, dass** die Schale (10) unterhalb des Radlaufteils (7) derart zusammengefügt ist, dass ein Boden (15) der Schale (10) bezüglich des Radlaufteils (7) nach unten versetzt ist.

2. Struktur nach Anspruch 1, wobei die Schale (10) zwei erste Wände (11, 12), die im Wesentlichen vertikal sind, im Wesentlichen parallel zu dem Strukturblech (22) umfasst, die jeweils mit mindestens einem Rand (27) an dem Radlaufteil (7) angebracht sind, und von welchen mindestens eine (11, 12) in einem Abstand von dem Strukturblech (22), der kleiner oder gleich dem größten Maß der Schale (10) ist, liegt.

3. Struktur nach einem der Ansprüche 1 oder 2, die außerdem einen Längsträger (2) zur hinteren Verstärkung umfasst, wobei sich der seitliche Karosserieüberbau (9) über dem Längsträger (2) erhebt, wobei die Schale (10) an dem Längsträger (2) mittels eines Überhöhungsteils (20), das einen Balken bildet und den Längsträger (2) und die Schale (10) verbindet, angebracht ist.

4. Struktur nach einem der vorstehenden Ansprüche, die mehrere parallele Strukturbleche (22, 25), die zu beiden Seiten der Schale (10) bezüglich der Längsachse (x) des Fahrzeugs angeordnet sind, umfasst.

5. Struktur nach einem der vorstehenden Ansprüche, wobei mindestens ein Strukturblech (25) Teil eines Strukturabschnitts (23) ist, der ein Gehäuse mit vier Seiten und einem Boden bildet, von dem eine Seite ein im Wesentlichen vertikaler Oberflächenabschnitt (3c) des Überbaus ist, und dessen Boden ein Abschnitt des Radlaufteils (7) ist.

6. Struktur nach einem der Ansprüche 3 bis 5, wobei das Überhöhungsteil (20) eine Balkengeometrie mit im Wesentlichen U-förmigem Querschnitt aufweist, wobei die Achse (z) des Balkens im Wesentlichen senkrecht ausgerichtet ist, wobei sich mindestens zwei parallele Ränder (17, 18) des U-förmigen Querschnitts in der Verlängerung der zwei ersten Wände (11, 12), die im Wesentlichen vertikal sind, der Schale (10) platzieren.

7. Struktur nach Anspruch 6, wobei die Schale (10) mindestens eine dritte Seitenwand (13), die im Wesentlichen vertikal oder schräg ist, umfasst, die die zwei ersten Wände (11, 12) verbindet, eine Bodenwand (15) aufweist, die im Wesentlichen horizontal ist, die die zwei ersten Wände (11, 12) verbindet und in der Fortsetzung der dritten Wand (13) platziert ist, und wobei die Schale (10) durch Ränder (27) der zwei ersten Wände (11, 12) und der dritten Wand (13) mit dem Radlaufteil (7) angebracht ist.

8. Struktur nach Anspruch 7, wobei die Schale (10) auch an dem Radlaufteil (7) entlang eines Rands zusammengefügt ist, der entweder entlang der Bodenwand (15) der Schale (10) verläuft, oder einer vierten Wand (14), die der dritten Wand (13) entgegengesetzt ist und mit niedrigerer Höhe als die Höhe der dritten Wand (13) verläuft.

9. Struktur nach einem der Ansprüche 3 bis 8, wobei das Überhöhungsteil (20) an der Schale (10) an mindestens mehreren unterschiedlichen Punkten jeder der zwei ersten Wände (11, 12) der Schale (10) angebracht ist.

10. Kraftfahrzeug, das eine Karosseriestruktur (1) nach Anspruch 1 umfasst.

## Claims

1. Body structure (1) of a motor vehicle, comprising a body side superstructure (9) defining, on either side of the vehicle, two wheel arch housing portions (4) of the vehicle connected by a floor (5) of the vehicle, the body structure (9) comprising, at each of the two wheel arch housing portions (4) a wheel arch part (7) and at least one rear shock absorber attachment cup (10) assembled by its edges (27) to each of the wheel arch parts (7), the wheel arch part (7) defining at least a substantially oblique surface portion (30) around and beyond the edges of the cup (10), the superstructure (9) additionally comprising a structural sheet (22) connected to an oblique surface portion of the wheel arch part (7) and connected to a substantially vertical surface portion (3c) of the superstructure (9), **characterized in that** the cup (10) is assembled from below the wheel arch part (7) in such a way that a base (15) of the cup (10) is offset downwardly relative to the wheel arch part (7).

2. Structure according to Claim 1, wherein the cup (10) has two substantially vertical walls (11, 12) which are substantially parallel to the structural sheet (22) and each assembled by at least one edge (27) to the wheel arch part (7), and of which at least one (11, 12) is situated at a distance from the structural sheet (22) which is less than or equal to the greatest dimension of the cup (10).

3. Structure according to either of Claims 1 and 2, additionally comprising a rear reinforcing side member (2) the body side superstructure (9) rising above the side member (2) wherein the cup (10) is assembled to the side member (2) by means of a raising part (20) forming a beam and connecting the side member (2) and the cup (10).

4. Structure according to any one of the preceding claims, comprising a plurality of parallel structural sheets (22, 25) disposed on either side of the cup (10) with respect to the longitudinal axis (x) of the vehicle.

5. Structure according to any one of the preceding claims, wherein at least one structural sheet (25) forms part of a structure portion (23) forming a box with four sides and a base, of which one side is a substantially vertical surface portion (3c) of the superstructure and of which the base is a portion of the wheel arch part (7).

6. Structure according to any one of Claims 3 to 5, wherein the raising part (20) has a beam geometry with a substantially U-shaped section, the axis (Z) of the beam being oriented substantially vertically, at least two parallel edges (17, 18) of the U-shaped section being placed in the extension of the two first substantially vertical walls (11, 12) of the cup (10).

7. Structure according to Claim 6, wherein the cup (10) has at least a third substantially vertical or oblique side wall (13) joining the two first walls (11, 12), has a substantially horizontal base wall (15) joining the two first walls (11, 12) and placed so as to continue on from the third wall (13), and wherein the cup (10) is assembled by edges (27) of the two first walls (11, 12) and of the third wall (13) to the wheel arch part (7).

8. Structure according to Claim 7, in which the cup (10) is also assembled to the wheel arch part (7) along an edge which extends along either the base wall (15) of the cup (10), or a fourth wall (14) opposite the third wall (13) and having a height shorter than the height of the third wall (13).

9. Structure according to any one of Claims 3 to 8, in which the raising part (20) is assembled to the cup (10) at least at a number of different points of each of the first two walls (11, 12) of the cup (10).

10. Motor vehicle, comprising a body structure (1) according to Claim 1.
